# FASCICULE DE BREVET EUROPEEN

(11) **EP 0 695 779 B1**
(45) Date de publication et mention de la délivrance du brevet: **25.05.2005**
(21) Numéro de dépôt: 95201886.9
(22) Date de dépôt: 11.07.1995
(51) Int. Cl.: C08J 7/14

(54) **Procédé pour le traitement superficiel d'un article par sulfonation et neutralisation**
Verfahren zur Oberflächenbehandlung eines Gegenständes durch Sulfonierung und Neutralisation
Process for the surface treatment of articles by sulphonation and neutralisation

(30) Priorité: 20.07.1994 BE 9400693
(43) Date de publication de la demande: 07.02.1996
(73) Titulaire: Inergy Automotive Systems Research (SA), 1120 Bruxelles (BE)
(72) Inventeur: Tinant, Anne, B-1160 Bruxelles (BE); Menu, Frédéric, B-7080 Frameries (BE); Hruska, Zdenek, B-1200 Bruxelles (BE)
(74) Mandataire: Decamps, Alain René François

(56) Documents cités:
- JP-A- 1 203 437
- US-A- 3 629 025
- US-A- 3 911 184
- US-A- 5 202 161

## Description

La présente invention concerne un procédé pour le traitement superficiel d'un article par sulfonation et neutralisation.

Des matériaux métalliques sont utilisés de longue date pour la fabrication d'articles substantiellement imperméables tels que tuyaux, films ou récipients, en particulier flacons ou réservoirs. Aujourd'hui, les matières plastiques offrent de nombreux avantages pour de telles applications, notamment leur facilité de mise en oeuvre, leur légèreté, leur moindre sensibilité à la corrosion. Néanmoins, la plupart des matières plastiques courantes ne sont pas parfaitement imperméables à certaines substances organiques, et notamment à certains constituants présents dans les carburants. En particulier, l'imperméabilité relative des matières plastiques couramment utilisées est très sensiblement affectée par l'incorporation dans les carburants d'un ou plusieurs alcools tels que par exemple l'éthanol ou le méthanol. En outre, les dispositions réglementaires concernant les émissions dans l'environnement tolérées des réservoirs à carburant sont de plus en plus strictes, en raison notamment des contraintes environnementales. Il convient dès lors de pouvoir disposer d'articles offrant une imperméabilité sensiblement accrue en particulier aux nouveaux carburants susmentionnés.

Le document (BE-740763) cite le traitement superficiellement d'un récipient afin d'améliorer son imperméabilité par une sulfonation en présence d'anhydride sulfurique suivie d'une neutralisation. Néanmoins, l'imperméabilité offerte par un récipient ainsi traité reste faible au regard des exigences susmentionnées.

Il est également connu d'obtenir des résultats améliorés, selon le document JP-58-134856, par sulfonation en présence d'anhydride sulfurique et neutralisation à l'ammoniac suivie d'un traitement avec une solution aqueuse contenant un sel d'un métal alcalino-terreux, dans le cas de récipients en matière plastique destinés à contenir un mélange d'essence et d'alcool. Néanmoins, un tel traitement est plus complexe et de mise en oeuvre industrielle moins intéressante en ce qu'il nécessite une étape supplémentaire après sulfonation et neutralisation.

Le document Chemical Abstracts vol. 112, n° 57897 résumant la demande de brevet japonais JP-A-01.203437 décrit la préparation de récipients en polyoléfines pour leur conférer des bonnes propriétés barrière vis-à-vis des hydrocarbures contenant de l'eau ou de l'alcool par sulfonation du récipient sur sa surface interne et/ou externe suivie d'un traitement avec une solution aqueuse d'un polymère présentant des cations actifs de manière à former une couche polyionique complexe. Une solution aqueuse de polyéthylèneimine est citée en exemple à titre de polymère hydrosoluble présentant des cations actifs. Cependant la neutralisation par une solution aqueuse de polyéthylèneimine ne permet pas d'obtenir un niveau d'imperméabilité suffisant.

La présente invention a dès lors pour objet de permettre la fabrication selon un procédé simple d'articles présentant une imperméabilité élevée en particulier aux carburants susmentionnés.

L'invention concerne à cet effet un procédé pour le traitement superficiel d'au moins une partie d'un réservoir à carburant ou d'un autre corps creux, un tuyau ou un autre article associé au fonctionnement d'un circuit d'alimentation en carburant comprenant une surface essentiellement constituée d'une matière plastique, ledit procédé comprenant une étape de sulfonation et une étape de neutralisation, caractérisé en ce quel'étape de neutralisation est réalisée par mise en contact de la surface essentiellement constituée d'une matière plastique avec un mélange de polyalkylèneimines.

Les articles concernés peuvent être de tout type, par exemple sous forme de film, plaque, tuyau, corps creux, etc. L'invention est intéressante dans le cas d'un corps creux. Elle est tout particulièrement intéressante dans le cas d'un réservoir à carburant. Elle s'applique également de manière avantageuse à un autre corps creux, à un tuyau ou à un autre article associé au fonctionnement du circuit d'alimentation en carburant d'un moteur destiné en particulier à l'équipement d'un véhicule automobile.

La matière plastique est une matière plastique polymère solide dans les conditions normales d'utilisation de l'article et sulfonable, telle que connue par ailleurs. Cette matière plastique peut être constituée d'un ou plusieurs polymères. En général, on met en oeuvre un ou plusieurs polymères thermoplastiques hydrocarbonés possédant une structure moléculaire de base linéaire et dont les substituts éventuels sont non aromatiques. Ces polymères peuvent être des homopolymères, copolymères ou leurs mélanges. A titre de tels polymères, on peut retenir par exemple des polyoléfines ou des polymères du chlorure de vinyle. De bons résultats ont été obtenus à partir d'une polyoléfine, en particulier à partir d'un polyéthylène. D'excellents résultats ont été obtenus à partir d'un polyéthylène haute densité (PEHD).

A la matière plastique peuvent évidemment être ajoutés un ou plusieurs additifs usuels tels que antioxydants, stabilisants, pigments ou autres, dans la mesure où ils n'affectent pas l'aptitude de l'article à la sulfonation ni de manière sensible ses propriétés notamment mécaniques en vue de son utilisation ultérieure.

Les articles visés comprennent au moins une surface essentiellement constituée d'une matière plastique. Ils peuvent être dans leur ensemble essentiellement constitués d'une seule matière plastique ou comprendre une surface essentiellement constituée d'une matière plastique et par ailleurs une ou plusieurs autres matières plastiques ou un ou plusieurs autres matériaux. Ainsi, l'article peut comprendre une ou plusieurs autres couches ou une ou plusieurs autres parties en une ou plusieurs autres matières. On peut ainsi retenir en particulier selon l'invention un article multicouche dont seule la couche de surface à traiter est essentiellement constituée d'une matière plastique. Dans le cas de corps creux, la couche de surface à traiter peut être la couche intérieure ou extérieure. De préférence, on traite la couche intérieure du corps creux. D'excellents résultats ont été obtenus sur des articles dans leur ensemble essentiellement constitués d'une seule matière plastique.

Le procédé selon invention peut comprendre une ou plusieurs étapes de sulfonation. De préférence, il comprend une seule étape de sulfonation.

L'étape de sulfonation est réalisée de manière et dans des conditions classiques pour un homme du métier. On met en contact les articles à traiter avec de l'anhydride sulfurique dilué dans un composé inerte en phase liquide ou gazeuse. On retient de préférence un gaz inerte sec tel que par exemple de l'azote, de l'anhydride carbonique, de l'anhydride sulfureux ou de l'air. Il est important d'éviter la présence de vapeur d'eau qui pourrait entraîner, par réaction avec l'anhydride sulfurique, la formation de gouttelettes d'acide sulfurique. On incorpore en général de 0,1 à 35 % en volume d'anhydride sulfurique, de préférence de 15 à 30 %. Le temps de contact est inversement proportionnel à la concentration en anhydride sulfurique. Il peut en général être de 0,1 à 20 minutes. La pression et la température peuvent être adaptées notamment en fonction des autres paramètres opératoires. On peut en particulier travailler à température et sous pression ambiantes.

Souvent, on purge après sulfonation l'article ou le récipient dans lequel il est contenu de l'anhydride sulfurique résiduaire, par exemple avec un gaz inerte tel que l'azote. On peut également neutraliser l'anhydride sulfurique résiduaire par une injection d'ammoniac très brève, de l'ordre de quelques secondes, en particulier durant moins de 10 secondes. Dans ce dernier cas, il est ensuite préférable de rincer, le plus souvent à l'eau, l'article ou la partie de l'article qui sera ensuite soumise à l'étape de neutralisation.

Le procédé selon l'invention peut comprendre une ou plusieurs étapes de neutralisation de tout ou partie de l'article. De préférence, il comprend une seule étape de neutralisation de tout ou partie de l'article.

L'étape de neutralisation est réalisée par mise en contact de la surface essentiellement constituée d'une matière plastique avec un mélange de polyalkylèneimines. Parmi les polyalkylèneimines, on peut mettre en oeuvre les homo- ou les copolymères, non substitués, branchés ou linéaires, ou substitués sur les fonctions amines par des groupements alkyles ou acyles. Le poids moléculaire de ces polyalkylèneimines peut varier de 300 à 1 000 000.

Le mélange de polyalkylèneimines peut notamment permettre d'associer les avantages de la mise en oeuvre de plusieurs polyalkylèneimines de poids moléculaires sensiblement différents. On retient avantageusement un mélange de plusieurs polyéthylèneimines.

Durant l'étape de neutralisation, le mélange de polyalkylèneimines est généralement présent à raison d'au moins 0,05 % en volume. Il est de préférence présent à raison d'au moins 0,1 % en volume, plus préférentiellement encore à raison d'au moins 1 % en volume. Le mélange de polyalkylèneimines peut être mis en oeuvre pur ou de manière diluée. Avantageusement, il est mis en oeuvre de manière diluée, en particulier sans dépasser 20 % en volume, plus particulièrement encore sans dépasser 10 % en volume.

Le mélange de polyalkylèneimines peut notamment être dilué dans l'eau. L'article peut être mis en contact avec une solution de neutralisation sous forme liquide ou gazeuse. Dans le cas d'un corps creux, il est simple de le remplir d'une solution de neutralisation aqueuse sous forme liquide. Cette solution peut en particulier être mise en oeuvre sous forme de jet pulvérisé.

Le temps de contact pour l'étape de neutralisation peut aisément être optimisé par l'homme du métier à partir de quelques essais de mise au point, en relation avec les autres paramètres opératoires. En pratique, une courte durée suffit. De bons résultats ont été obtenus sans devoir dépasser 5 minutes. Souvent, ledit temps de contact est d'au moins 10 secondes, de préférence d'au moins 1 minute.

La neutralisation peut être réalisée dans une large plage de températures, par exemple de 0 à 100 °C en particulier lorsque le mélange de polyalkylèneimines est dilué dans l'eau. De bons résultats ont été obtenus à température ambiante.

La pression peut également être adaptée aux autres paramètres opératoires. De bons résultats ont été obtenus sous pression atmosphérique.

Après neutralisation, l'article est si nécessaire rincé et/ou séché, afin d'en éliminer les agents de neutralisation et les produits de réaction résiduaires.

Le procédé selon l'invention permet le traitement superficiel d'un article sur une profondeur suffisante afin d'améliorer sensiblement son imperméabilité. En pratique, la profondeur traitée est souvent de l'ordre de 5 à 30 microns. De préférence, elle est d'au moins 10 microns.

Le procédé de traitement superficiel selon l'invention peut être avantageusement associé à la mise en oeuvre préalable de la ou des matières constitutives de l'article.

L'invention concerne dès lors également un procédé pour la fabrication d'un article comprenant une surface essentiellement constituée d'une matière plastique, ledit procédé comprenant au moins une étape de mise en oeuvre et un traitement superficiel tel que défini ci-dessus.

Par étape de mise en oeuvre, on entend désigner toute technique connue utilisable pour la transformation d'une ou plusieurs matières et permettant de donner naissance à un article. Dans le cas de la mise en oeuvre d'une ou plusieurs matières plastiques, on peut citer à titre d'exemples non limitatifs d'étape de mise en oeuvre l'injection, l'extrusion, l'extrusion-soufflage ou le calandrage. Dans le cas particulier de corps creux en une ou plusieurs matières plastiques, on préfère réaliser comme étape de mise en oeuvre une extrusion-soufflage.

Il peut s'avérer avantageux que l'étape de mise en oeuvre soit rapidement, en particulier immédiatement, suivie par le traitement superficiel.

Alternativement, le traitement superficiel peut être réalisé sur la matière plastique dont sera essentiellement constituée au moins une surface de l'article, avant même l'étape de mise en oeuvre, en particulier sur la poudre de polymère non encore additivée.

### Exemples

Les exemples 1R à 7R qui suivent sont donnés à titre de comparaison.

L'exemple 8 illustre l'invention de manière non limitative.

La perméabilité y est exprimée en g.mm/m².j, soit en grammes de carburant fois millimètres d'épaisseur de l'article par mètre carré de surface d'échange avec l'extérieur et par jour. Il est en effet logique d'apprécier la perméabilité d'un article proportionnellement à son épaisseur et de manière inversement proportionnelle à la surface d'échange qu'il possède avec l'extérieur, plutôt que de se référer à une perméabilité seulement exprimée en grammes de carburant par jour . En effet, une telle mesure ne prendrait pas en compte l'effet d'échelle bien connu de l'homme du métier, par exemple dans le cas de corps creux, entre un flacon, d'épaisseur et de surface réduite, et un réservoir à carburant, d'épaisseur et de surface d'échange plus élevées.

Par perméabilité en régime, on entend désigner cette propriété lorsqu'elle est devenue stable en fonction du temps. Le délai nécessaire pour y parvenir est évidemment lié notamment aux caractéristiques propres à l'article et ne peut être défini de manière absolue. A titre d'ordre de grandeur, on peut en particulier estimer que la perméabilité d'un flacon est en régime après environ 1 mois tandis qu'il faut environ 3 mois pour parvenir au même état dans le cas d'un réservoir.

### Exemple 1R

On a réalisé par extrusion-soufflage un flacon en polyéthylène haute densité (PEHD) d'un volume intérieur de 360 cm³, d'une épaisseur de 2 mm et de surface intérieure de 280 cm². Le PEHD utilisé était de type PHILLIPS de densité moyenne 0,946 g/cm³, d'un indice de fluidité HLMI (High Load Melt Index mesuré selon la norme ASTM 1238-1987) de 5,4 à 6,8 g/10 min et contenant 1g/kg de stabilisant IRGANOX® 1076.

La surface interne de ce flacon a été mise en contact par injection et maintien durant 10 minutes à température ambiante et sous pression atmosphérique d'un flux gazeux contenant 15 % en volume d'anhydride sulfurique dilué dans de l'azote.

Le flacon a alors été purgé avec de l'azote durant 5 minutes à température ambiante et sous pression atmosphérique.

Il a ensuite été rempli à température ambiante et sous pression atmosphérique avec 200 cm³ d'une solution aqueuse contenant 10 % en volume d'ammoniac puis agité durant 5 minutes.

Le flacon a enfin été vidé, rincé à l'eau et séché en étuve à 60 °C durant une nuit.

L'évaluation de la perméabilité de ce flacon a été réalisée avec un mélange de 92,5 % en volume d'essence CEC RF 08-A-85 sans plomb, d'indice d'octane 95, 5 % en volume de méthanol et 2,5 % en volume d'éthanol (mélange connu aux Etats-Unis sous l'appellation TF2 = Test Fuel 2). Le flacon a été rempli de 300 cm³ de ce mélange, bouché, pesé et stocké dans une salle à 40 °C.

Après 1 mois, en état de régime, sa perméabilité, mesurée par perte de poids selon la norme ECE 34-1979 (Annexe 5), était de 14,3 g.mm/m².j.

A titre de comparaison, le même flacon non traité perdait en régime 71 g.mm/m².j.

### Exemple 2R

Un flacon identique à celui selon l'exemple 1R a été traité de la même manière si ce n'est que la neutralisation a été réalisée en remplissant le flacon avec une solution aqueuse contenant 10 % en volume de polyéthylèneimine LUPASOL® WF de poids moléculaire égal à 20 000.

Après 1 mois, en état de régime, sa perméabilité, mesurée par perte de poids selon la norme ECE 34-1979 (Annexe 5), était de 1,43 g.mm/m².j.

### Exemple 3R

Un flacon identique à celui selon l'exemple 1R a été traité de la même manière que selon cet exemple si ce n'est que la neutralisation a été réalisée en remplissant le flacon avec de l'éthylènediamine pure (Merck Index, 10e édition, 3741).

Après 1 mois, en état de régime, sa perméabilité, mesurée par perte de poids selon la norme ECE 34-1979 (Annexe 5), était de 2,85 g.mm/m².j.

### Exemple 4R

Un flacon identique à celui selon l'exemple 1R a été traité de la même manière que selon cet exemple si ce n'est que pour la neutralisation le flacon a été rempli d'une solution aqueuse comprenant 10 % en volume de triéthylènetétramine (Merck Index, 10e édition, 9483).

Après 1 mois, en état de régime, sa perméabilité, mesurée par perte de poids selon la norme ECE 34-1979 (Annexe 5), était de 2,14 g.mm/m².j.

### Exemple 5R

Un flacon identique à celui selon l'exemple 1R a été traité de la même manière que selon cet exemple si ce n'est que pour la neutralisation le flacon a été rempli avec une solution aqueuse comprenant 10 % en volume d'un mélange à parts égales en volume de polyéthylèneimine (PEI) LUPASOL® WF et d'éthylènediamine (EDA).

Après 1 mois, en état de régime, sa perméabilité, mesurée par perte de poids selon la norme ECE 34-1979 (Annexe 5), était de 1,43 g.mm/m².j.

### Exemple 6R

On a réalisé par extrusion-soufflage un réservoir à carburant en polyéthylène haute densité (PEHD) d'un volume intérieur de 60 litres, d'une épaisseur moyenne de 5 mm et de surface intérieure de 1,5 m². Le PEHD utilisé était de densité moyenne 0,948 g/cm³, d'un indice de fluidité HLMI de 3,4 g/10 min et contenait 0,2 g/kg de noir de carbone et 2 g/kg de stabilisant IRGANOX® B 225.

La surface interne de ce réservoir a été mise en contact par injection et maintien durant 2 minutes à 49 °C et sous pression atmosphérique d'un flux gazeux contenant 15 % en volume d'anhydride sulfurique dilué dans de l'azote. Le réservoir a alors été purgé avec de l'azote durant 2 minutes à température ambiante et sous pression atmosphérique.

Il a ensuite été rempli à température ambiante et sous pression atmosphérique avec un mélange comprenant 70 % en volume d'ammoniac et 15 % en volume d'air humidifiés par 15 % en volume d'eau sous forme de fines gouttelettes pulvérisées, durant 100 secondes.

Le réservoir a enfin été vidé, rincé à l'eau et séché en étuve à 60 °C durant une nuit.

L'évaluation de la perméabilité du réservoir a été réalisée avec un mélange de 90 % en volume d'essence CEC RF 08-A-85 sans plomb, d'indice d'octane 95, et 10 % en volume d'éthanol (mélange connu aux Etats-Unis sous l'appellation TF1 =Test Fuel 1). Le réservoir a été rempli de 30 litres de ce mélange, bouché, pesé et stocké dans une salle à 40 °C.

Après 3 mois, en état de régime, sa perméabilité, mesurée par perte de poids selon la norme ECE 34-1979 (Annexe 5), était de 10 g.mm/m².j.

La perméabilité de ce réservoir a également été évaluée selon la mesure SHED telle que décrite dans "Measurement of fuel evaporative emission from gasoline powered passenger cars and light trucks, enclosure technique SAE J171, June 82". Après 3 mois, en état de régime, la perméabilité du réservoir mesurée selon cette méthode était de 8,3 g.mm/m².j.

### Exemple) 7R

Un réservoir à carburant identique à celui selon l'exemple 6R a été traité de la même manière si ce n'est que pour la neutralisation, le réservoir a été rempli avec 3 litres d'une solution aqueuse contenant 5 % en volume de polyéthylèneimine LUPASOL® P de poids moléculaire compris entre 600 000 et 1 000 000, puis agité durant 3 minutes.

Après 3 mois, en état de régime, sa perméabilité, mesurée par perte de poids selon la norme ECE 34-1979 (Annexe 5), était de 1 g.mm/m².j.

Au même moment, la perméabilité du réservoir mesurée selon la méthode SHED susmentionnée était de 0,83 g.mm/m².j.

### Exemple 8 (conforme à l'invention)

Un réservoir à carburant identique à celui selon l'exemple 6R a été traité de la même manière si ce n'est que pour la neutralisation, le réservoir a été rempli avec 3 litres d'une solution aqueuse contenant 5 % en volume d'un mélange à parts égales de polyéthylèneimine LUPASOL® P de poids moléculaire compris entre 600 000 et 1 000 000 et de polyéthylèneimine LUPASOL® G de poids moléculaire d'environ 2 000, puis agité durant 3 minutes.

Après 3 mois, en état de régime, la perméabilité du réservoir mesurée selon la méthode SHED susmentionnée était de 0,67 g.mm/m².j.

## Revendications

1. Procédé pour le traitement superficiel d'au moins une partie d'un réservoir à carburant ou d'un autre corps creux, un tuyau ou un autre article associé au fonctionnement d'un circuit d'alimentation en carburant comprenant une surface essentiellement constituée d'une matière plastique, ledit procédé comprenant une étape de sulfonation et une étape de neutralisation, **caractérisé en ce que** l'étape de neutralisation est réalisée par mise en contact de la surface essentiellement constituée d'une matière plastique avec un mélange de polyalkylèneimines.

2. Procédé selon la revendication 1, dans lequel la matière plastique est un polyéthylène haute densité.

3. Procédé selon une quelconque des revendications précédentes, dans lequel les polyalkylèneimines sont des polyéthylèneimines.

4. Procédé pour la fabrication d'un réservoir à carburant ou d'un autre corps creux, un tuyau ou un autre article associé au fonctionnement d'un circuit d'alimentation en carburant comprenant une surface essentiellement constituée d'une matière plastique, ledit procédé comprenant une étape de mise en oeuvre et un traitement superficiel selon l'une quelconque des revendications précédentes.

## Patentansprüche

1. Verfahren zur Oberflächenbehandlung von wenigstens einem Teil eines Treibstoffbehälters oder eines anderen Hohlkörpers, eines Rohres oder eines anderen Gegenstandes, welcher/welches mit dem Betrieb eines Treibstoffzuführsystems verbunden ist, umfassend eine im wesentlichen aus einem Kunststoffmaterial gebildete Oberfläche, welches Verfahren einen Schritt der Sulfonierung und einen Schritt der Neutralisation umfaßt, **dadurch gekennzeichnet, daß** die Neutralisation mittels Inkontaktbringen der im wesentlichen aus einem Kunststoffmaterial gebildeten Oberfläche mit einer Mischung von Polyalkyleniminen erfolgt.

2. Verfahren-nach Anspruch 1, nach welchem das Kunststoffmaterial ein Polyethylen hoher Dichte ist.

3. Verfahren nach einem der vorhergehenden Ansprüche, in welchem die Polyalkylenimine Polyethylenimine sind.

4. Verfahren zur Herstellung eines Treibstoffbehälters oder eines anderen Hohlkörpers, eines Rohres oder eines anderen Gegenstandes, welcher/welches mit dem Betrieb eines Treibstoffzuführsystems verbunden ist, umfassend eine im wesentlichen aus einem Kunststoffmaterial gebildete Oberfläche, welches Verfahren einen Verarbeitungs Schritt und einen Oberflächenbehandlung nach einem der vorhergehenden Ansprüche umfaßt.

## Claims

1. Process for the surface treatment of at least one part of a fuel tank or of another hollow body, a pipe or another article associated with the operation of a fuel supply circuit, comprising a surface essentially made of a plastic, said process comprising a sulphonation step and a neutralization step, **characterized in that** the neutralization step is carried out by bringing the surface essentially made of a plastic into contact with a mixture of polyalkyleneimines.

2. Process according to Claim 1, in which the plastic is a high-density polyethylene.

3. Process according to either of the preceding claims, in which the polyalkyleneimines are polyethyleneimines.

4. Process for the manufacture of a fuel tank or of another hollow body, a pipe or another article associated with the operation of a fuel supply circuit, comprising a surface essentially made of a plastic, said process comprising a processing step and a surface treatment according to any one of the preceding claims.
